# EUROPEAN PATENT SPECIFICATION

(11) **EP 1 445 088 B1**
(45) Date of publication and mention of the grant of the patent: **24.05.2006**
(21) Application number: 02806714.8
(22) Date of filing: 12.08.2002
(51) Int. Cl.: B62M 11/06, F16H 3/08

(54) **MECHANICAL SPEED-CHANGING SYSTEM FOR BICYCLES AND SIMILAR VEHICLES**
MECHANISCHES GANGWECHSELSYSTEM FÜR FAHRRÄDER UND ÄHNLICHE FAHRZEUGE
SYSTEME DE CHANGEMENT DE VITESSE MECANIQUE POUR BICYCLETTES ET VEHICULES ANALOGUES

(30) Priority: 22.08.2001 ES 200101947; 28.06.2002 ES 200201495
(43) Date of publication of application: 11.08.2004
(73) Proprietor: Llibrer Porcar, José Miguel, 46010 Valencia (ES)
(72) Inventor: Llibrer Porcar, José Miguel, 46010 Valencia (ES)
(74) Representative: Ungria Lopez, Javier
(86) International application number: PCT/ES2002/000402
(87) International publication number: WO 2003/078133

(56) References cited:
- DE-A- 3 316 575
- DE-C1- 3 614 716
- FR-A- 795 941
- GB-A- 2 320 069
- US-A- 2 505 464

## Description

### OBJECT OF THE INVENTION

The present invention refers to a mechanical gear change for bicycles and similar vehicles according to the preamble of claim 1, which is of the type that is situated within a casing located in a lower zone corresponding to the axle of the pedals, in such a way that the mechanical change includes two axles, one of which corresponds to the axle of the pedals. Such a mechanical gear change is shown in US-A-2 505 464.

With this change, both the assembly and its functioning are simplified, with friction and rubbing between moving parts being reduced and problems of grip being eliminated. An important particularity is that in some cases, no greasing is required.

### BACKGROUND OF THE INVENTION

Gear changes for bicycles are normally composed of two similar devices, a front one for the chain wheels and a rear one for the pinions of the drive wheel, which are integral with the rear axle.

These devices act on the chain in such a way that they cause it to jump from one pinion to another, and from one chain wheel to another, with the aim of varying the rotation ratios.

These changes are external and are subject to blows, wear, rusting, etc., which favour their malfunctioning. Also, by acting directly on the chain, they deform and destroy it owing to the considerable tensions and torsions to which they subject it.

Furthermore, Invention Patent number P-9502063 consists of a pedalier box that includes a front axle provided with a set of pinions which transmit their movement to a rear shaft, with interposition of an intermediate pinions, the pedals being connected at the ends of the front axle.

The box incorporates a mechanism for transmission of the rotary movement of the rear shaft to a conventional chain wheel coupled externally and freely to the axle of the pedals.

This new pedalier box, though it solves the problems stated previously, presents the drawback that its efficiency is not all that might be expected.

Invention patent No. P-9901233 consists of a pedalier box which is also of the type of box mentioned earlier, and in which certain transmission chains have been provided between the pinions of the front and rear axle. Also, this new box incorporates a blocking device so that one of the pinions coupled to the tubular steel rear axle can be selectively blocked tight.

There also exist other mechanical changes like those mentioned above, such as French invention patent No. 795941, German patent No. 688932, PCT WO99/06262 and United States patent No. 2.505.464.

### DESCRIPTION OF THE INVENTION

In order to achieve the objectives and avoid the drawbacks mentioned in the above sections, the invention as claimed proposes a mechanical gear change for bicycles and similar which is situated in the interior of a casing established in correspondence with the axle of the pedals, in such a manner that the gear-change unit is associated with this front axle of the pedals, in turn related to another rear axle with interposition of a set of toothed wheels and pinions.

So, the front axle in principle includes some toothed wheels coupled to that axle and which are susceptible to independently engaging with other toothed wheels integral with the rear axle which presents a tubular structure. The wheels of the front axle are axially displaceable and are also pulled along in their rotary movement by that front axle.

The rear axle in turn has a group of free pinions which are constantly engaged with another group of pinions coupled to the front axle with interposition of a freely rotating coaxial tube, and at the same time there is a second group of pinions fixed to that tube, as occurs with an exterior chain wheel where a chain engages for transmitting the movement to the rear wheel of the bicycle with interposition of a small pinion.

The tubular structure rear axle incorporates a device for selectively blocking one of the free pinions coupled to that axle, in such a way that, depending on the free pinion that is chosen, we will obtain a rotational speed of the chain wheel and therefore of the bicycle.

The device is associated with a cable which ends in a conventional lever intended for operating and acting on the device in order to obtain the different output speeds.

The device has axial actuation, while at the same time the selective blocking of the different free pinions takes place in the radial direction.

The mechanical change of the invention is smoother in its functioning and action, as well as being less noisy and more durable than other gear changes of this types, such as for example the one corresponding to Invention Patent No. P-99010233.

The blocking device merely exerts traction in the direction of rotation, in other words, like the mechanism which the pinions of the rear wheel of a bicycle habitually incorporate.

It can be pointed out that it is not the free pinions of the rear axle that are the drive elements but instead the rear axle itself, unlike conventional gear changes of this type of the invention, where the rear axle merely serves to support the free pinions, with the latter being the elements that transmit the rotation.

The mechanical change of the invention, together with the casing, is an independent unit that is fitted in the interior of a complementary housing located in the corresponding zone with the axle of the pedals.

Another embodiment has been provided for in the rear axle unit, which includes two diametrically opposed recesses where one of the new blocking devices that incorporates each of the free pinions of the said rear axle is susceptible to being secured, these new devices replacing the sole blocking device mentioned earlier.

So, with the new blocking device, we select one of the free pinions of the rear axle by displacing it axially.

In another more improved embodiment of the invention, some bearings are incorporated which are inserted between the free pinions of the rear axle in order to prevent any rubbing in the relative motion between those pinions mounted on the said bearings in a floating manner. The incorporation of these bearings inserted between the free pinions has eliminated the need for greasing and a smoother, less noisy and longer-lasting functioning is achieved.

Another characteristic of the invention is that the initial means of transmission for change of speed of rotation between both axles does not require any axial displacements of the toothed wheels of the front axle, instead these will at all times be engaged with the complementary toothed wheels of the rear axle, in such a way that in order to change the speed a second blocking device has been provided as the blocking device which unitarily fixes one of the free pinions of the rear axle, these wheels being freely coupled on said rear axle and associated with the blocking device found in the tubular structure rear axle.

Another characteristic of the invention is that the blocking device presents another technically more advanced embodiment than those referred to previously.

Below, in order to facilitate a better understanding of this descriptive specification, and forming an integral part thereof, some figures are accompanied in which, in a manner that is illustrative rather than limiting, the object of the invention has been represented.

### BRIEF DESCRIPTION OF THE DRAWINGS

**Figure 1.-** Shows a perspective view of a mechanical gear change for bicycles and similar vehicles, forming the object of the invention.
**Figure 2.-** Shows a profile view of the gear change of the invention.
**Figure 3.-** Shows an elevation view of the selective blocking device of a group of free pinions in order to choose different output speeds.
**Figure 4.-** Shows a profile view of that represented in the previous figure.
**Figure 5.-** Shows a plan view of that shown in the previous two figures.
**Figure 6.-** Shows a view of a new system of blocking different from that represented in figure 3.
**Figure 7.-** Shows a perspective view of a casing in which is located the mechanical gear change unit constituting an independent module that is fitted in a housing established at the height of the axle for the pedals.
**Figure 8.-** Shows a view similar to figure 1, where the mechanical gear change incorporates some important improvements with respect to the gear change represented in figure 1.

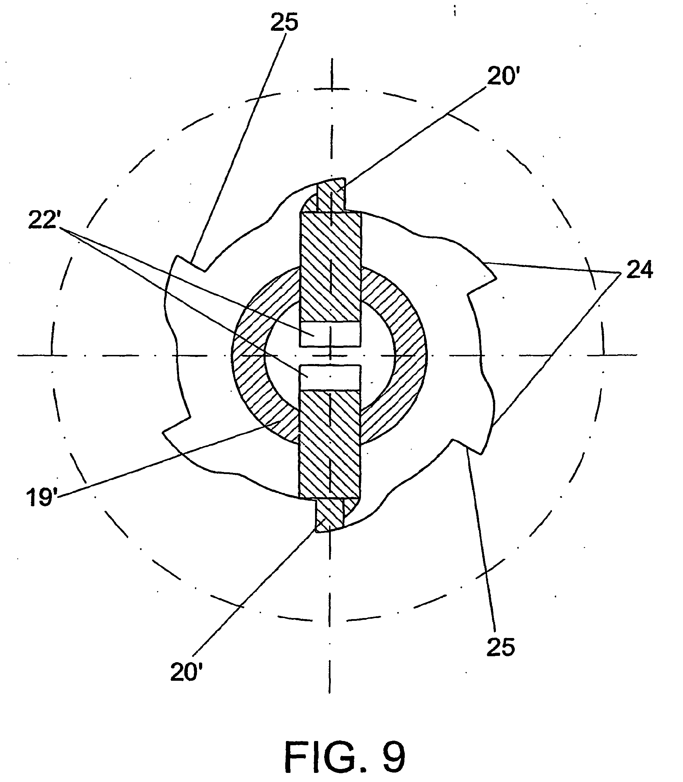

**Figure 9.-** Shows a similar view to figure 4.

### DESCRIPTION OF AN EMBODIMENT OF THE INVENTION

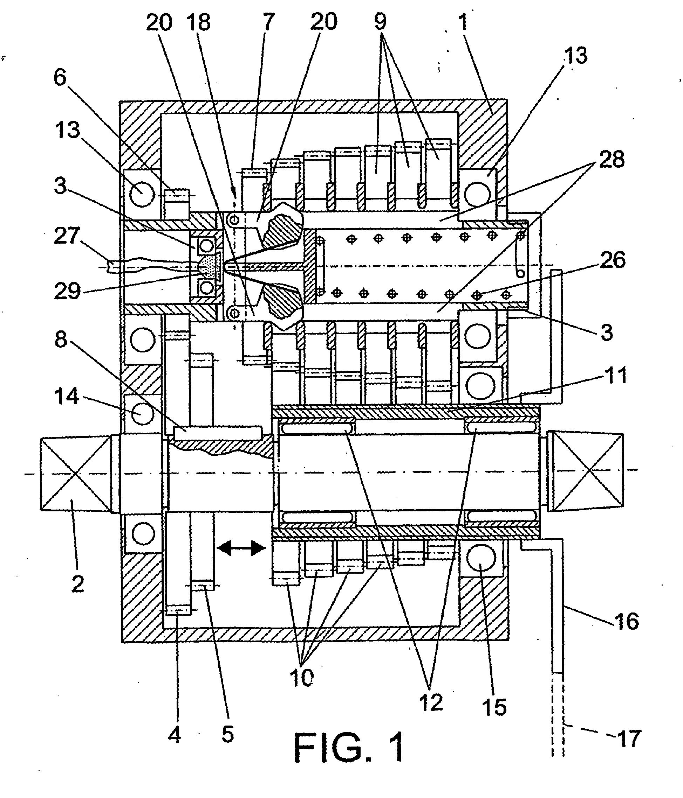

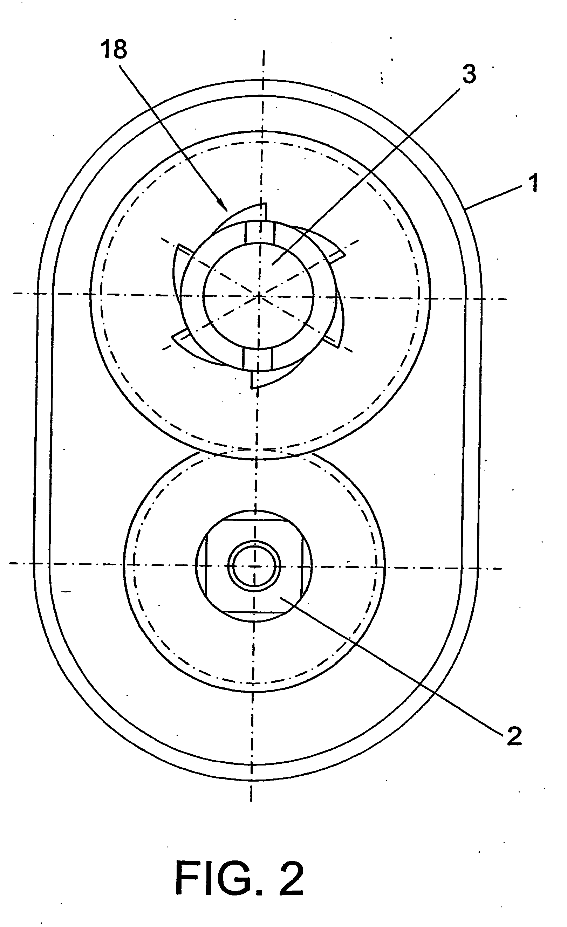

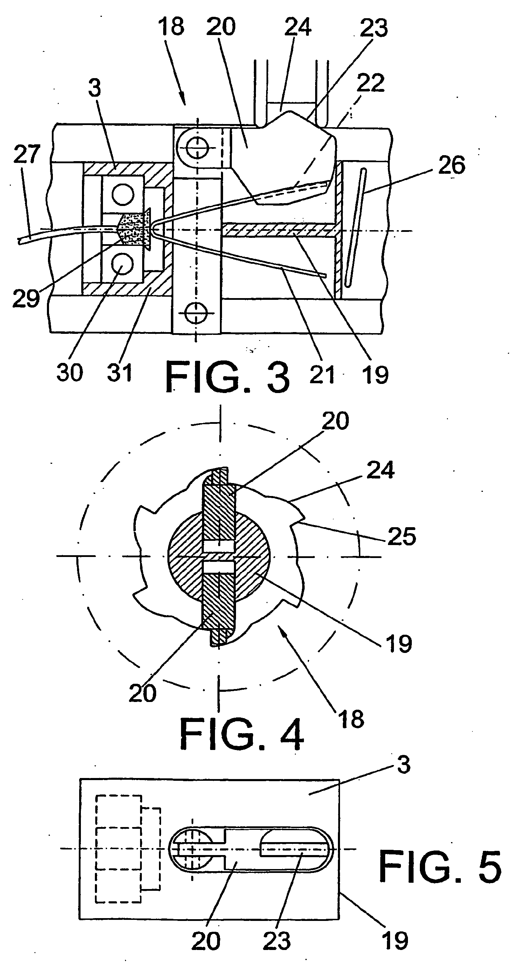

Described below is an example of embodiment of the invention, in principle heeding the numbering adopted in figures 1 to 7.

The mechanical gear change is located in principle within a casing 1 established in correspondence with a front axle 2 of the pedals which is in turn related to a second rear axle 3 of tubular structure by means of some pinions and toothed wheels.

The front axle 2 includes two toothed wheels 4 and 5 susceptible to independently engaging with other toothed wheel pairs 6 and 7 integral with the rear axle 3. To achieve this, the toothed wheels 4 and 5 of the front axle 2 are dragged in their rotation around that axle by a cotter 8, though they can also be axially displaced in order to select the engagement of one or the other.

Therefore, the toothed wheels 4 and 5 permit the number of gear speeds to be doubled.

This rear axle 3 has a group of free pinions 9 which respectively and constantly engage with another group of pinions 10 integral with a tube 11 coaxially coupled around the rear axle 2 with interposition of some needle bearings 12.

The rear axle 3 is coupled to the casing 1 with interposition of other bearings 13, as occurs with the rear axle 3 and coaxial tube 11 which are coupled to the casing 1 via other bearings 14 and 15.

The coaxial tube 11 incorporates into one of its ends a chain wheel 16 integral with it where a chain 17 connects for transmitting movement to the rear wheel of the bicycle.

The tubular structure rear axle 3 incorporates in its interior a selective blocking device 18 of free pinions 9 coupled to that rear axle 3, in such a way that, depending on the pinion that is blocked, we will obtain a defined output speed. The same thing occurs with the toothed wheels 4, 5, 6 and 7 which connect the two axles 1 and 2.

So, the blocking device 18 is defined starting from a central support 19, axially guided and displaceable inside the rear axle 3 and on which two diametrically opposed swinging pieces 20 are coupled in an articulated fashion, and which are forced radially towards the outside by means of a single "V" shaped spring 21, the arms of which are housed and guided in some channels 22 of those swinging pieces 20.

These swinging pieces 20 possess certain off-centre angular extensions 23 which fit into some arched recesses 24 of the respective free pinion 9 in order to transmit the rotary movement of the rear axle 3 to the said free pinion 9 in one direction, in such a manner that in the other direction of rotation the swinging pieces 20 do not engage with the free pinion 9. In this way, when the pedalling of the bicycle ceases, the axle of the pedals 2 is not dragged along by the movement of the bicycle, as conventionally occurs.

The free pinions 9 are not the drive elements, this role being played by the rear axle 3 itself, unlike in other known gear-change systems of this type where the rear axle merely serves as a support element for the free pinions, which are what act as the drive elements rather than the axle.

The arched recesses 24 end in a radial plane 25 where they meet up with the swinging pieces 20 in order to drag the free pinions 9 of the rear axle 3.

The blocking device 18 also includes an axial spring 26 which presses on the central support 19 in one direction, so that displacement of the central support 19 and of the swinging pieces 20 in order to change the speed or gear of the bicycle is carried out by means of a cable 27 connected to the central support 19, this cable 27 ending in a gear-change lever which is not represented in the figures and which exerts traction against the resistance offered by the axial spring 26.

Internally, the rear axle 3 includes some longitudinal grooves 28 for facilitating the axial guiding and displacement of the swinging pieces 20.

The gear-change cable 27 is connected to the central support 19 with interposition of a small body 29 fitted into a bearing 30 which is in turn fitted in a bushing 31 embedded within the tubular structure rear axle 3.

With this device that is described, the rear axle 3 in principle receives the movement via the toothed wheels 4 or 5 of the front axle 2 which engages with one of the toothed wheels 6 or 7 of the rear axle 3. The axial displacement of the toothed wheels 4 and 5 is done by means of a conventional gear-change lever.

The casing 1, together with all the other elements of the gear change, constitute an independent module 32 which is fitted and housed into a complementary housing 33 corresponding to the axle of the pedals 2. To achieve this, the housing 33 is open on one of its sides, and at the same time the said independent module is fixed inside the housing 33 by means of some screws 34 or by any other means.

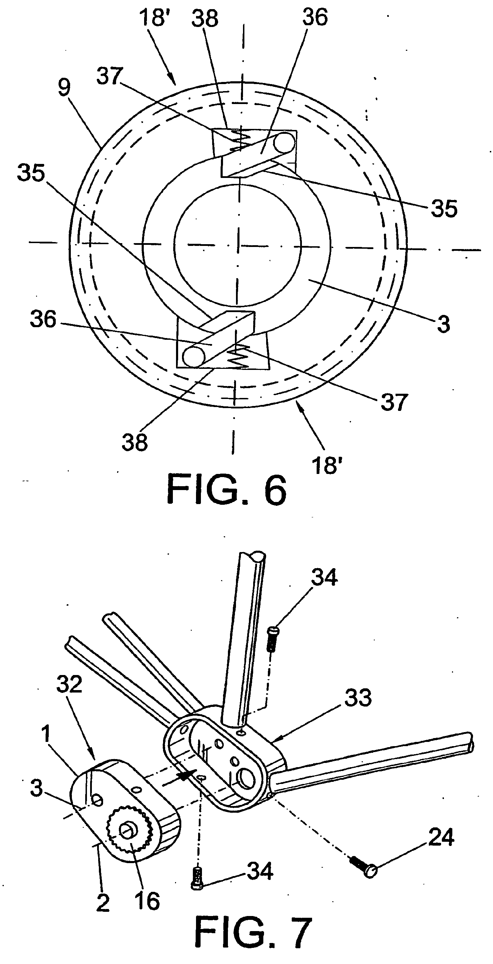

Furthermore, represented in figure 6. is a new blocking device 18' where the rear axle 3 includes two diametrically opposed cuts 35, in which each pair of swinging arms 36 is susceptible to being secured against the resistance of some springs 37, in such a way that the arms 36 and the springs 37 are housed in some interior housings 38 of the free pinions 9 of the rear axle 3.

So, in order to select the securing for one of the free pinions 9 with the rear axle 3, it will be necessary to displace it axially until the cuts 35 of the rear axle 3 are made to coincide with the swinging arms 36 of the chosen pinion 9.

The rest of the swinging arms 36 of the other free pinions 9 will slide on the outer surface of the rear axle 3.

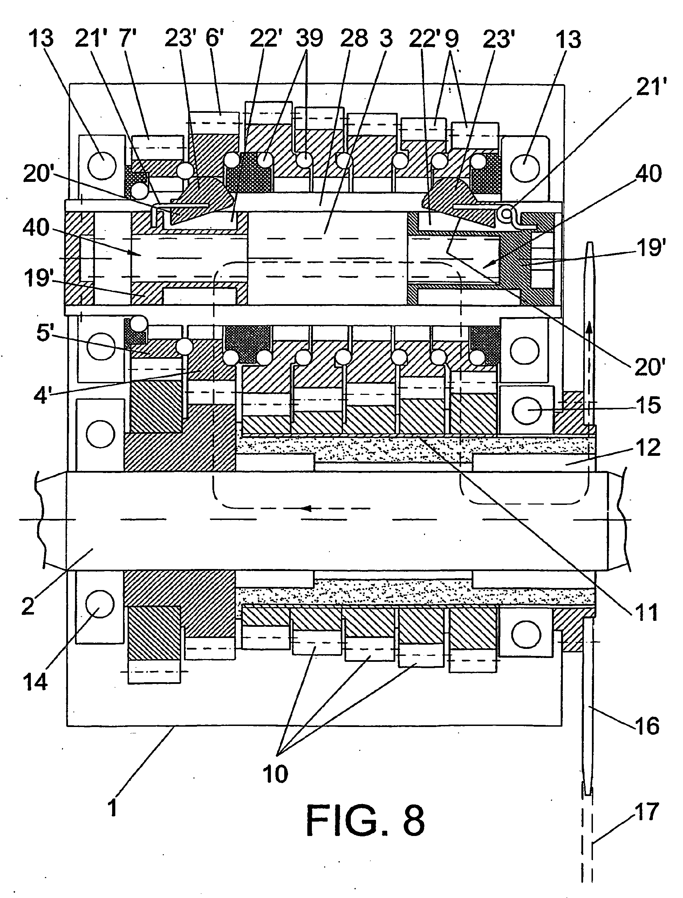

Turning now to figure 8, the mechanical gear change presents certain improvements and particularities with respect to that described above, which we will describe below.

The toothed wheels 4' and 5' of the front axle 2 constantly engage with the pairs of wheels 6' and 7' freely coupled in principle on the rear axle 3. To achieve this, the toothed wheels 4' and 5' are dragged in their rotation without axial displacement.

The groups of free pinions 9 of the rear axle 3 are coupled in a floating manner with interposition of some intermediate bearings 39.

So, in order to select one speed or another between both axles 2 and 3 via the pairs of wheels 4' and 5', 6' and 7', which are constantly engaged with each other, a new blocking device 40 has been provided, similar to the first blocking device 18 and also located in the interior of the tubular structure rear axle 3, in such a way that this new blocking device 40 will cause one of the toothed wheels 6' or 7' to become integral and block with the rear axle 3, leaving the other wheel pair free without becoming blocked together with the rear axle 3.

This rear axle 3, of tubular structure, incorporates in its interior another similar blocking device 40 of free pinions 9 coupled to that rear axle 3, in such a way that, depending on the pinion that is blocked, we will obtain a certain output speed.

The new blocking devices 40 are defined starting from a central support 19' axially guided and displaceable in the interior of the rear axle 3 and on which is coupled at least one elastic wedge 20' which is radially pressed towards the outside by means of a single spring 21'. This spring in turn serves as a connection element with respect to the central support 19'. The elastic wedges 20' are in turn partially housed in longitudinal channels 22' of the tubular structure central supports 19'. The elastic wedges 20' possess a swinging movement when it comes to carrying out a gear change, this swinging being supported by the springs 21' while their swinging will be guided in the channels 22' of the central supports 19'.

The elastic wedges 20' possess certain rounded extensions 23' which fit into the arched recesses 24 of the respective free pinions 9 and toothed wheels 6' or 7', in order to transmit the rotary movement, in such a manner that in the other direction of rotation the elastic wedges 20' do not engage with the free pinion 9 and respective toothed wheel 6' or 7'. In this way, when the pedalling of the bicycle ceases, the axle of the pedals is not dragged along by the movement of the bicycle, as has been referred to above in the previous devices.

The rear axle 3, as referred to above, includes longitudinal grooves 28 for also facilitating the axial guiding and displacement of the elastic wedges 20'.

## Claims

1. **MECHANICAL GEAR CHANGE FOR BICYCLES AND SIMILAR VEHICLES**, which comprises:
- a front axle (2) with pedals and a rear axle (3) of tubular structure which receives a movement of the front axle (2) of the pedals via a pair of toothed wheels (4', 5', 6', 7') engaged with each other and which are associated with said axles (2, 3), which are in turn coupled to a casing (1) where the mechanical gear-change set is located;
- a group of free pinions (9, 9') coupled in the rear axle (3) and a group of free pinions (10) coupled around the front axle (2), both groups of pinions being constantly engaged together;
- a selective blocking device (18') for the free pinions (9, 9') coupled in the rear axle (3), said device being located inside said tubular structure rear axle (3), in such a manner that the axially displaceable blocking device is connected to a cable (27) that ends in a gear-change lever;
- an exterior chain wheel (16) coupled around the front axle (2) of the pedals;
- the group of pinions (10) of the front axle (2) being integrally coupled on a freely rotating tube (11) which is coaxial with the front axle (2), essentially with interposition of bearings (12);
**characterised in that** the selective blocking device (18') comprises at least one swinging arm (36) adapted to be secured against the resistance of a spring (37), said spring (37) and said swinging arm (36) being located in an interior housing (38) of each of the free pinions (9) of the rear axle (3) and toothed wheels (6', 7'), the blocking device (18') also comprising at least one cut (35) where the respective pinion and toothed wheel is able to be secured by axial displacement of the rear axle (3) and via the swinging arm (36).

2. **MECHANICAL GEAR CHANGE FOR BICYCLES AND SIMILAR VEHICLES,** according to claim 1, **characterised in that** the exterior chain wheel (16) is integrally fixed to the coaxial tube (11) coupled around the front axle (2).

3. **MECHANICAL GEAR CHANGE FOR BICYCLES AND SIMILAR VEHICLES,** according to any of the preceding claims, **characterised in that** the toothed wheels (4', 5', 6', 7') which transmit movement from the front axle (2) to the rear axle (3), are all engaged in pairs with each other, at the same time as, in correspondence with the wheels (6', 7') of the rear axle (3), there exists a selective blocking device of said wheels (6', 7') freely coupled in said rear axle (3), this axially displaceable device being located in inside said rear axle (3).

4. **MECHANICAL GEAR CHANGE FOR BICYCLES AND SIMILAR VEHICLES**, according to any of the preceding claims, **characterised in that** the group of free pinions (9, 9') of the rear axle (3) constitutes a floating set where bearings (39) have been inserted between said free pinions (9, 9') avoiding contact between them, in order to avoid friction between said pinions during their relative movement.

5. **MECHANICAL GEAR CHANGE FOR BICYCLES AND SIMILAR VEHICLES,** according to any of the preceding claims, **characterised in that** the selective blocking device comprises:
- a central support (19, 19') axially displaceable in the interior of the rear axle (3);
- swinging pieces (20, 20') associated with the central support (19, 19') and which selectively make integral the free pinions (9), the toothed wheels (6', 7') and combinations thereof, with the rear axle (3).

6. **MECHANICAL GEAR CHANGE FOR BICYCLES AND SIMILAR VEHICLES,** according to claim 5, **characterised in that** the swinging pieces (20) of the selective blocking device (18) are associated with the central support (19) in an articulated way against the resistance of a central spring "V"-shaped (21) which radially pushes said small swinging pieces (20) in pairs towards the outside.

7. **MECHANICAL GEAR CHANGE FOR BICYCLES AND SIMILAR VEHICLES,** according to claim 6, **characterised in that** the selective blocking device (18) furthermore includes a small body (29) coupled freely and in a rotational way to the central support (19), this body being where the cable (27) connects for carrying out the gear change.

8. **MECHANICAL GEAR CHANGE FOR BICYCLES AND SIMILAR VEHICLES**, according to claim 5, **characterised in that** the swinging pieces (20') of the selective blocking device (40) are associated with the tubular structure central support (19') by means of springs (21') tending to push said swinging pieces (20') radially towards the outside.

9. **MECHANICAL GEAR CHANGE FOR BICYCLES AND SIMILAR VEHICLES**, according to claim 5, **characterised in that** the swinging pieces (20, 20') comprise extensions (23, 23') which are introduced into some arched recesses (24) of the respective free pinions (9) and toothed wheels (6' and 7') in order to block said free pinions together with the rear axle (3).

10. **MECHANICAL GEAR CHANGE FOR BICYCLES AND SIMILAR VEHICLES,** according to claim 7, **characterised in that** the small body (29) associated with the central support (19) is housed in a bearing (30), said bearing being in turn embedded in a bushing (31) fitted into the tubular structure rear axle (3).

11. **MECHANICAL GEAR CHANGE FOR BICYCLES AND SIMILAR VEHICLES,** according to claim 6, **characterised in that** the arms of the spring (21) are housed and guided in channels (22) of the swinging pieces (20, 20').

12. **MECHANICAL GEAR CHANGE FOR BICYCLES AND SIMILAR VEHICLES,** according to claim 5, **characterised in that** the rear axle (3) includes axial guiding grooves of the swinging pieces (20, 20').

13. **MECHANICAL GEAR CHANGE FOR BICYCLES AND SIMILAR VEHICLES,** according to claim 1, **characterised in that** the casing (1) together with the rest of elements of the gear change constitute a compact independent module (32) which fits inside a housing (33) corresponding to the axle of the pedals (2), said module being fixed by means of some screws (34) or the like.

## Patentansprüche

1. Mechanische Gangschaltung für Fahrräder und ähnliche Fahrzeuge, die umfasst:
eine Vorderachse (2) mit Pedale und eine Hinterachse (3) einer röhrenförmigen Struktur, die eine Bewegung der Vorderachse (2) der Pedalen über ein Paar von Zahnrädern (4', 5', 6', 7') empfängt, die miteinander in Eingriff sind und die mit den Achsen (2, 3) gekoppelt sind, die wiederum mit einem Gehäuse (1), in dem die mechanische Gangschaltungsgruppe angeordnet ist, gekoppelt sind,
eine Gruppe von freien Ritzeln (9, 9'), die in der Hinterachse (3) gekoppelt sind, und eine Gruppe von freien Ritzeln (10), die um die Vorderachse (2) gekoppelt sind, wobei beide Gruppen von Ritzeln konstant miteinander in Eingriff sind,
eine abstimmbare Feststellvorrichtung (18') für die in der hinteren Achse (3) gekoppelten Ritzel (9, 9'), wobei die Vorrichtung in der röhrenförmigen Struktur der Hinterachse (3) in einer derartigen Art und Weise angeordnet ist, dass die axial verschiebbare Feststellvorrichtung an ein Seil (27) angeschlossen ist, das in einem Gangschaltungshebel endet,
ein äußeres Kettenrad (16), das um die Vorderachse (2) der Pedale gekoppelt ist, wobei die Gruppe der Ritzel (10) der Vorderachse (2) integral auf einem frei drehenden Rohr (11) gekoppelt ist, das unter Einfügung von Lagern (12) im Wesentlichen mit der Vorderachse (2) koaxial ist,
**dadurch gekennzeichnet, dass** die abstimmbare Feststellvorrichtung (18') wenigstens einen Schwenkarm (36) umfasst, der eingerichtet ist, um gegen den Widerstand einer Feder (37) gesichert zu sein, die Feder (37) und der Schwenkarm (36) in einem innengehäuse (38) jedes der freien Ritzel (9) der Hinterachse (3) und der Zahnräder (6', 7') angeordnet sind, die Feststellvorrichtung (18') außerdem wenigstens eine Ausnehmung (35) umfasst, in der das jeweilige Ritzel und Zahnrad durch Axialverschiebung der Hinterachse (3) und durch den Schwenkarm (36) gesichert werden kann.

2. Mechanische Gangschaltung für Fahrräder und ähnliche Fahrzeuge nach Anspruch 1, **dadurch gekennzeichnet, dass** das äußere Kettenrad (16) integral an dem Koaxialrohr (11), das um die Vorderachse (2) gekoppelt ist, befestigt ist.

3. Mechanische Gangschaltung für Fahrräder und ähnliche Fahrzeuge nach einem der vorhergehenden Ansprüche, **dadurch gekennzeichnet, dass** die Zahnräder (4', 5', 6', 7'), die die Bewegung von der Vorderachse (2) auf die Hinterachse (3) übertragen, alle in Paaren miteinander in Eingriff sind, und gleichzeitig in Übereinstimmung mit den Rädern (6', 7') der Hinterachse (3) eine abstimmbare Feststellvorrichtung der Räder (6', 7'), die frei in der Hinterachse (3) gekoppelt sind, vorhanden ist, und diese axial verschiebbare Feststellvorrichtung im Inneren der Hinterachse (3) angeordnet ist.

4. Mechanische Gangschaltung für Fahrräder und ähnliche Fahrzeuge nach einem der vorhergehenden Ansprüche, **dadurch gekennzeichnet, dass** die Gruppe der freien Ritzel (9, 9') der Hinterachse (3) eine gleitende Gruppe bildet, in der zwischen die freien Ritzel (9, 9') Lager (39) eingefügt wurden, um Kontakt zwischen diesen zu verhindem, so dass Reibung zwischen den Ritzeln während ihrer Relativbewegung vermieden wird.

5. Mechanische Gangschaltung für Fahrräder und ähnliche Fahrzeuge nach einem der vorhergehenden Ansprüche, **dadurch gekennzeichnet, dass** die abstimmbare Feststellvorrichtung umfasst:
einen Zentralträger (19,19'), der in dem inneren der Hinterachse (3) axial verschiebbar ist,
Schwenkelemente (20, 20'), die mit dem Zentralträger verbunden sind und die selektiv die freien Ritzel (9), die Zahnrader (6', 7') und Kombinationen davon mit der Hinterachse (3) integral machen.

6. Mechanische Gangschaltung für Fahrräder und ähnliche Fahrzeuge nach Anspruch 5, **dadurch gekennzeichnet, dass** die Schwenkelemente (20) der abstimmbaren Feststellvorrichtung (18) mit dem Zentralträger (19) durch Gelenke, gegen den Widerstand einer V-förmigen Zentralfeder (21), die die kleinen Schwenkelemente (20) paarweise radial nach außen drückt, verbunden sind.

7. Mechanische Gangschaltung für Fahrräder und ähnliche Fahrzeuge nach Anspruch 6, **dadurch gekennzeichnet, dass** die abstimmbare Feststellvorrichtung (18) des Weiteren einen kleinen Körper (29) enthält, der frei und drehend an den Zentralträger (19) gekoppelt wird, wobei der Körper dort ist, wo das Seil (27) zum Ausführen des Gangwechsels anschließt.

8. Mechanische Gangschaltung für Fahrräder oder ähnliche Fahrzeuge nach Anspruch 5, **dadurch gekennzeichnet, dass**
die Schwenkelemente (20') der abstimmbaren Feststellvoffichtung (40) mit der röhrenförmigen Struktur des Zentralträgers (19') mittels Federn (21'), die dazu neigen, die Schwenkelemente (20') radial in Richtung der Außenseite zu drücken, verbunden sind.

9. Mechanische Gangschaltung für Fahrräder oder ähnliche Fahrzeuge nach Anspruch 5, **dadurch gekennzeichnet, dass** die Schwenkelemente (20,20') Verlängerungen (23, 23') umfassen, die in einige bogenförmige Aussparungen (24) der jeweiligen freien Ritzel (9) und Zahnräder (6' und 7') eingeführt werden, so dass die freien Ritzel zusammen mit der Hinterachse (3) blockiert werden.

10. Mechanische Gangschaltung für Fahrräder und ähnliche Fahrzeuge nach Anspruch 7, **dadurch gekennzeichnet, dass** der mit dem Zentralträger verbundene kleine Körper (29) in ein Lager (30) aufgenommen ist, wobei das Lager wiederum in eine Buchse (31) eingebettet ist, die in die röhrenförmige Struktur der Hinterachse (3) eingepasst ist.

11. Mechanische Gangschaltung für Fahrräder und ähnliche Fahrzeuge nach Anspruch 6, **dadurch gekennzeichnet, dass** die Arme der Feder (21) in Kanäle (22) der Schwenkelemente (20, 20') aufgenommen sind und in diesen geführt werden.

12. Mechanische Gangschaltung für Fahrräder und ähnliche Fahrzeuge nach Anspruch 5, **dadurch gekennzeichnet, dass** die Hinterachse (3) axiale Führungsnuten der Schwenkelemente (20, 20') enthält.

13. Mechanische Gangschaltung für Fahrräder und ähnliche Fahrzeuge nach Anspruch 1, **dadurch gekennzeichnet, dass** das Gehäuse (1) zusammen mit dem Rest der Elemente der Gangschaltung eine kompakte unabhängige Baugruppe (32) bildet, die in ein Gehäuse (33) eingesetzt werden kann, das der Achse der Pedale (2) entspricht, wobei die Baugruppe mittels einiger Schrauben (34) oder dergleichen befestigt wird.

## Revendications

1. Changement de vitesse mécanique pour bicyclettes et véhicules similaires, comprenant :
un axe avant (2) avec des pédales et un axe arrière (3) de structure tubulaire qui reçoit un mouvement de l'axe avant (2) des pédales via une paire de roues dentées (4', 5', 6', 7') mises en prise entre elles et qui sont associées auxdits axes de roue (2, 3) qui à leur tour sont couplés à un boîtier (1) où l'ensemble de changement de vitesse mécanique est situé ;
un groupe de pignons libres (9, 9') couplé dans l'axe arrière (3) et un groupe de pignons libres (10) couplé autour de l'axe avant (2), les deux groupes de pignons étant mis en prise ensemble de manière constante ;
un système de blocage sélectif (18') pour les pignons libres (9, 9') couplés dans l'axe arrière (3), ledit dispositif étant situé à l'intérieur dudit axe arrière (3) de structure tubulaire, de sorte que le dispositif de blocage axialement déplaçable est raccordé à un câble (27) qui se termine dans un levier de changement de vitesse ;
un plateau externe (16) couplé autour de l'axe avant (2) des pédales ;
le groupe de pignons (10) de l'axe avant (2) étant couplé de manière solidaire sur un tube (11) tournant librement qui est coaxial à l'axe avant (2), essentiellement avec l'interposition des paliers (12) ;
**caractérisé en ce que** le dispositif de blocage sélectif (18') comprend au moins un bras oscillant (36) adapté pour être fixé contre la résistance d'un ressort (37), ledit ressort (37) et ledit bras oscillant (36) étant situés dans un boîtier interne (38) de chacun des pignons libres (9) de l'axe arrière (3) et des roues dentées (6', 7'), le dispositif de blocage (18') comprenant également au moins une découpe (35) où le pignon respectif et la roue dentée peuvent être fixés par le déplacement axial de l'axe arrière (3) et via le bras oscillant (36).

2. Changement de vitesse mécanique pour bicyclettes et véhicules similaires, selon la revendication 1, **caractérisé en ce que** le plateau externe (16) est fixé de manière solidaire au tube coaxial (11) couplé autour de l'axe avant (2).

3. Changement de vitesse mécanique pour bicyclettes et véhicules similaires, selon l'une quelconque des revendications précédentes, **caractérisé en ce que** les roues dentées (4', 5', 6', 7') qui transmettent le mouvement de l'axe avant (2) à l'axe arrière (3), sont toutes mises en prise par paires entre elles, en même temps que, par rapport aux roues (6', 7') de l'axe arrière (3), il existe un dispositif de blocage sélectif desdites roues (6', 7') couplé librement dans ledit axe arrière (3), ce dispositif axialement déplaçable étant situé à l'intérieur dudit axe arrière (3).

4. Changement de vitesse mécanique pour bicyclettes et véhicules similaires, selon l'une quelconque des revendications précédentes, **caractérisé en ce que** le groupe de pignons libres (9, 9') de l'axe arrière (3) constitue un ensemble flottant où les paliers (39) ont été insérés entre lesdits pignons libres (9, 9') en évitant le contact entre eux, afin d'éviter le frottement entre lesdits pignons pendant leur mouvement relatif.

5. Changement de vitesse mécanique pour bicyclettes et véhicules similaires, selon l'une quelconque des revendications précédentes, **caractérisé en ce que** le dispositif de blocage sélectif comprend :
un support central (19, 19') axialement déplaçable à l'intérieur de l'axe arrière (3) ;
des pièces oscillantes (20, 20') associées au support central (19, 19') et qui rendent sélectivement solidaires les pignons libres (9), les roues dentées (6', 7') et leurs combinaisons, avec l'axe arrière (3).

6. Changement de vitesse mécanique pour bicyclettes et véhicules similaires, selon la revendication 5, **caractérisé en ce que** les pièces oscillantes (20) du dispositif de blocage sélectif (18) sont associées au support central (19) d'une manière articulée contre la résistance d'un ressort central en forme de V (21) qui pousse radialement lesdites petites pièces oscillantes (20) en paires vers l'extérieur.

7. Changement de vitesse mécanique pour bicyclettes et véhicules similaires, selon la revendication 6, **caractérisé en ce que** le dispositif de blocage sélectif (18) comprend en outre un petit corps (29) couplé librement et d'une manière rotationnelle au support central (19), ce corps étant à l'endroit où le câble (27) se raccorde pour réaliser le changement de vitesse.

8. Changement de vitesse mécanique pour bicyclettes et véhicules similaires, selon la revendication 5, **caractérisé en ce que** les pièces oscillantes (20') du dispositif de blocage sélectif (40) sont associées au support central (19') de structure tubulaire au moyen de ressorts (21') ayant tendance à pousser lesdites pièces oscillantes (20') radialement vers l'extérieur.

9. Changement de vitesse mécanique pour bicyclettes et véhicules similaires, selon la revendication 5, **caractérisé en ce que** les pièces oscillantes (20, 20') comprennent des extensions (23, 23') qui sont introduites dans certains enfoncements arqués (24) des pignons libres (9) et roues dentées (6' et 7') respectifs afin de bloquer lesdits pignons libres conjointement à l'axe arrière (3).

10. Changement de vitesse mécanique pour bicyclettes et véhicules similaires, selon la revendication 7, **caractérisé en ce que** le petit corps (29) associé au support central (19) est logé dans un palier (30), ledit palier étant à son tour enfoncé dans une douille (31) montée dans l'axe arrière (3) de structure tubulaire.

11. Changement de vitesse mécanique pour bicyclettes et véhicules similaires, selon la revendication 6, **caractérisé en ce que** les bras du ressort (21) sont logés et guidés dans des canaux (22) des pièces oscillantes (20, 20').

12. Changement de vitesse mécanique pour bicyclettes et véhicules similaires, selon la revendication 5, **caractérisé en ce que** l'axe arrière (3) comprend des rainures de guidage axiales des pièces oscillantes (20, 20').

13. Changement de vitesse mécanique pour bicyclettes et véhicules similaires, selon la revendication 1, **caractérisé en ce que** le boîtier (1) conjointement au reste des éléments du changement de vitesse constituent un module indépendant compact (32) qui s'adapte à l'intérieur d'un boîtier (33) correspondant à l'axe des pédales (2), ledit module étant fixé au moyen de certaines vis (34) ou similaires.
